# EUROPÄISCHE PATENTSCHRIFT

(11) **EP 1 271 085 B1**
(45) Veröffentlichungstag und Bekanntmachung des Hinweises auf die Patenterteilung: **17.02.2016**
(21) Anmeldenummer: 02011404.7
(22) Anmeldetag: 24.05.2002
(51) Int. Cl.: F28D 9/00, H01M 10/60, F28F 3/12

(54) **Vorrichtung zum Kühlen einer Fahrzeugeinrichtung, insbesondere Batterie oder Brennstoffzelle**
Device for cooling vehicle equipment, more particularly battery or fuel cell
Dispositif pour refroidir un équipement de véhicule, en particulier batterie ou pile à combustible

(30) Priorität: 23.06.2001 DE 10130369
(43) Veröffentlichungstag der Anmeldung: 02.01.2003
(73) Patentinhaber: MAHLE Behr GmbH & Co. KG, 70469 Stuttgart (DE)
(72) Erfinder: Brotz, Friedrich, 72766 Reutlingen (DE); Geskes, Peter, Dr., 73760 Ostfildern (DE); Pfender, Conrad, Dr.-Ing., 74354 Besigheim (DE); Damsohn, Herbert, Dr.-Ing., 73773 Aichwald (DE); Luz, Klaus, Dipl.-Ing., 71083 Herrenberg (DE)
(74) Vertreter: Grauel, Andreas

(56) Entgegenhaltungen:
- EP-A- 0 516 280
- EP-A2- 0 061 904
- EP-A2- 1 073 167
- WO-A-01/17049
- WO-A-96/00453
- DE-A- 4 017 749
- DE-A- 19 528 116
- DE-A- 19 639 115
- DE-A1- 10 024 389
- US-A- 2 379 671
- US-A- 4 567 119
- US-A- 4 578 324
- US-A- 5 132 174
- US-A- 5 683 828
- US-A- 6 066 408
- US-A- 6 070 428
- PATENT ABSTRACTS OF JAPAN Bd. 012, Nr. 183 (M-703), 28. Mai 1988 (1988-05-28) -& JP 62 293086 A (NIPPON DENSO CO LTD), 19. Dezember 1987 (1987-12-19)

## Beschreibung

Die Erfindung betrifft eine Vorrichtung zum Kühlen einer Fahrzeugeinrichtung, insbesondere Batterie (für 42V-Bordnetz beziehungsweise für Hybrid-Fahrzeug) oder Brennstoffzelle, mittels eines Kühlmittels mit einer Kühleinheit, aufweisend eine Mehrzahl an gleichartig ausgebildeten, mit Kühlmittel durchströmbaren und mit mindestens einem zu kühlenden Element der Fahrzeugeinrichtung in Anlagekontakt bringbaren Kühlelementen, die jeweils eine erste Kühlelementseite und eine dieser gegenüberliegende zweite Kühlelementseite aufweisen, wobei die Kühlelementseiten Anschlussöffnungen besitzen, die Eintritts- beziehungsweise Austrittsöffnungen für das Kühlmittel bilden und mit einem einen Kühlmittelkanal bildenden Innenraum des jeweiligen Kühlelements kommunizierend in Verbindung stehen, wobei die erste und zweite Kühlelementseite jeweils mindestens zwei Anschlussöffnungen aufweisen, wobei die Kühlelemente jeweils eine nicht mit dem Kühlmittelkanal in Wirkverbindung stehende Durchgangsöffnung zur mechanischen Verspannung der Kühlelemente mit dem zwischenangeordneten Element der Fahrzeugeinrichtung aufweisen, gemäß Oberbegriff des Anspruchs 1.

Vorrichtungen der eingangs genannten Art sind bekannt. Beispielsweise offenbart die DE 196 39 115 A1 ein plattenförmiges Wärmeübertragerelement mit einem oder mehreren lateral voneinander separierten, im Platteninneren im Wesentlichen plattenebenenparallel zwischen jeweiligen Einlass- und Auslassstellen verlaufenden Strömungskanälen. An jeder Seite des plattenförmigen Wärmeübertragerelements befindet sich eine Anschlussöffnung, wobei die Anschlussöffnungen jeweils eine Eintritts- oder Austrittsöffnung für das Kühlmittel bilden. Diese bekannten Wärmeübertragerelemente können beispielsweise als Kühlelement für Hochtemperaturbatterien von Elektrofahrzeugen eingesetzt werden. Nachteilhafterweise stellt sich bei der Durchströmung derartiger Wärmeübertragerelemente mit Kühlmittel ein verhältnismäßig hoher Betriebsdruckverlust ein, so dass zur Kühlmittel-Durchsetzung eines oder mehrerer Wärmeübertragerelemente ein relativ aufwendiges Kühlmittelzuführsystem zum Aufbau des notwendigen Betriebsdrucks eingesetzt werden muss.

Eine weitere Vorrichtung zum Kühlen einer Fahrzeugeinrichtung, insbesondere Brennstoffzelle, ist aus der US 5 858 567 A bekannt.

Es ist Aufgabe der Erfindung, eine Vorrichtung der eingangs genannten Art zu schaffen, welche durch verhältnismäßig geringe Betriebsdruckverluste bei einer Durchsetzung der Kühlelemente mit Kühlmittel gekennzeichnet ist.

Zur Lösung der Aufgabe wird eine Vorrichtung mit den Merkmalen des Anspruchs 1 vorgeschlagen, die sich dadurch auszeichnet, dass die erste und zweite Kühlelementseite jeweils mindestens zwei Anschlussöffnungen aufweisen. Hierdurch wird eine druckverlustverringerte Durchsetzung einer Mehrzahl an Kühlelementen mit Kühlmittel ermöglicht, wobei dieser vorteilhafte Effekt mit der steigenden Anzahl von zusammengeschalteten Kühlelementen an Bedeutung zunimmt. Ein jeweiliges Kühlelement kann somit eine oder zwei Eintrittsöffnungen zur Kühlmittelzuführung in den Innenraum des Kühlelements sowie zwei Austrittsöffnungen zur Abführung des Kühlmittels aus selbigem beziehungsweise zur Überführung desselben in ein weiteres Kühlelement aufweisen. Für den Fall, dass lediglich eine Eintrittsöffnung zur Kühlelementzuführung im Innenraum des entsprechenden Kühlelements vorgesehen ist, kann die zweite Eintrittsöffnung desselben Kühlelements in geeigneter Weise abgedeckt sein. Zusätzlich zu den geringeren Betriebsdruckverlusten kann bei Kühlelementen mit zwei Eintrittsöffnungen eine schnellere Durchsetzung des Innenraums derselben mit Kühlmittel gewährleistet werden.

Mit Vorteil steht eine Austrittsöffnung eines Kühlelements mit einer Eintrittsöffnung eines weiteren Kühlelements in Wirkverbindung. Somit kann mittels einer einzigen Kühlmittelzuführeinheit eine beliebige Vielzahl an miteinander in Wirkverbindung stehenden Kühlelementen mit Kühlmittel beaufschlagt werden unter Gewährleistung eines reduzierten Betriebsdruckverlustes.

Vorzugsweise sind die Anschlussöffnungen als Vorsprünge ausgebildet. Dies ermöglicht die Herstellung einer Wirkverbindung zwischen einer jeweiligen Austrittsöffnung eines ersten Kühlelements und einer zugehörigen Eintrittsöffnung eines zweiten, beabstandeten Kühlelements unter Ausbildung eines Aufnahmeraumes zur Zwischenschaltung von beispielsweise zu kühlenden Zellen der Fahrzeugeinrichtung. In dieser Weise ist es möglich, eine stabile und kompakte Kühlelement-Zellen-Sandwichstruktur zu schaffen, wobei die miteinander in Wirkverbindung stehenden Kühlelemente betriebsgünstig mit Kühlmittel durchsetzt werden. Alternativ können statt Vorsprünge auch separate Verbindungselemente (Anschlussrohre) zur Herstellung einer Wirkverbindung zwischen zwei Kühlelementen eingesetzt werden.

Vorteilhafterweise ist eine Eintrittsöffnung eines jeweiligen Kühlelements an einer ersten Kühlelementseite koaxial zu einer Austrittsöffnung an einer zweiten Kühlelementseite desselben Kühlelements angeordnet. Dies ermöglicht eine gleichförmige Zwischenraumausbildung zwischen jeweils zwei einander gegenüber angeordneten und miteinander wirkverbundenen Kühlelementen. Eine koaxiale und umlenkungsfreie Wirkverbindung von zwei zugehörigen Anschlussöffnungen erlaubt ferner eine effektive Reduzierung von nicht erwünschten Betriebsdruckverlusten in einem entsprechenden Übergangsbereich zwischen den Anschlussöffnungen.

Gemäß einer bevorzugten Ausführungsform sind die Eintrittsöffnungen und die Austrittsöffnungen eines jeweiligen Kühlelements zueinander komplementär als Stutzen oder Buchsen ausgebildet. Insbesondere ermöglichen derartige komplementäre Vorsprünge eine verhältnismäßig einfache Herstellung einer passgenauen und kühlmitteldichten Buchsen-Stutzen-Wirkverbindung zwischen zwei zueinander distanziert angeordneten Kühlelementen, gegebenenfalls unter Zwischenschaltung einer zugehörigen Dichtung.

Mit Vorteil bestehen die Kühlelemente jeweils aus zwei geometrisch gleichartig ausgebildeten Elementhälften, die miteinander kühlmitteldicht verbunden sind. Derartig gestaltete Elementhälften sind fertigungstechnisch verhältnismäßig einfach herstellbar und zu einem Kühlelement montierbar.

Entsprechend einer Weiterbildung der Erfindung weisen die Kühlelemente jeweils einen sich von einer Eintrittsöffnung an einer ersten Kühlelementseite zu einer Austrittsöffnung an einer zweiten Kühlelementseite windenden Kühlmittelkanal auf. Dabei begünstigen die jeweils mindestens zwei Anschlussöffnungen an der ersten und zweiten Kühlelementseite insbesondere bei einem sich beispielsweise M-förmig windenden Kühlmittelkanal eine schnelle und betriebsgünstige Durchsetzung des Kühlelements mit Kühlmittel bei gleichzeitig reduziertem Betriebsdruckverlust.

Vorzugsweise enthalten die Elementhälften eine Mehrzahl an voneinander beabstandeten Stabilisierungsnoppen, wobei jeweils zwei gegenüberliegende Stabilisierungsnoppen stirnseitig zueinander in Anlagekontakt stehen. Die insbesondere nach innen geprägten Stabilisierungsnoppen dienen dazu, den Kühlelementen eine notwendige Grundstabilität beziehungsweise Druckfestigkeit zu verleihen, insbesondere wenn eine Mehrzahl an Kühlelementen zur Herstellung einer kompakten Kühlelement-Zellen-Sandwichstruktur mit den zwischenangeordneten Zellen mechanisch verspannt werden. Die Stabilisierungsnoppen erhöhen die Grundsteifigkeit des jeweiligen Kühlelements und gewährleisten eine im Wesentlichen ebene Ausbildung der zum Anlagekontakt mit den Zellen vorgesehenen Kühlelementseiten auch nach Herstellung einer mechanischen Verspannung zwischen den aneinanderliegenden Sandwich-Bauelementen (Kühlelemente, Zellen). In dieser Weise wird eine betriebsgünstige Durchsetzung des jeweiligen Kühlmittelkanals mit Kühlmittel sowie eine optimierte Wärmeübertragung von einer zu kühlenden Zelle auf die entsprechenden Kontaktflächen der mit der Zelle in Anlagekontakt stehenden Kühlelementen gewährleistet.

Gemäß einer bevorzugten Ausführungsform sind die Anschlussöffnungen eines jeweiligen Kühlelements in einem Randbereich an der entsprechenden Kühlelementseite angeordnet. Hierdurch wird ermöglicht, dass die zu kühlenden Zellen in einer einzigen Montagerichtung in die jeweiligen Zwischenräume zwischen zwei gegenüberliegenden Kühlelementen eingeschoben werden können. Somit können eine Mehrzahl an Kühlelementen unter Ausbildung einer formstabilen Baugruppe vormontiert und mit einer entsprechenden Anzahl an geeignet angeordneten Zellen mittels einer einfachen Verschiebebewegung in einer einzigen Montagerichtung in Wirkverbindung gebracht werden. Anschließend kann eine mechanische Verspannung des Gesamtsystems erfolgen.

Mit Vorteil sind die Elementhälften als oberflächenstrukturierte Halbschalen ausgebildet unter Ausbildung einer jeweiligen, im Wesentlichen ebenen Kontaktfläche. Dabei dient die Oberflächenstrukturierung zur Formstabilisierung der Halbschalen und somit auch des Kühlelements, während die Ausbildung einer im Wesentlichen ebenen Kontaktfläche zur effektiven Wärmeübertragung einer zu kühlenden Zelle der Fahrzeugeinrichtung auf ein in Anlagekontakt stehendes Kühlelement dient.

Gemäß der Erfindung enthalten die Kühlelemente jeweils eine nicht mit dem Kühlmittelkanal in Wirkverbindung stehende Durchgangsöffnung zur mechanischen Verspannung der Kühlelemente mit zwischenangeordneten Fahrzeugelementen. Mittels derartiger Durchgangsöffnungen ist eine montagefreundliche und zuverlässige mechanische Verspannung von hintereinander angeordneten Kühlelementen und zwischenangeordneten Fahrzeugelementen (zum Beispiel Zellen) unter Ausbildung einer Sandwichstruktur möglich.

Gemäß der Erfindung sind die Kühlelemente Teil einer Kühleinheit, die endseitig jeweils ein mindestens eine Durchgangsöffnung enthaltendes Anschlusselement aufweist, welches mit einer zugehörigen und zwischenangeordneten Elementhälfte eines Kühlelements kühlmitteldicht wirkverbunden ist. Eine derartige Kühleinheit erlaubt die Ausgestaltung einer besonders formstabilen und montagefreundlichen Baugruppe, bestehend aus vorzugsweise einer Mehrzahl an hintereinander angeordneten und miteinander in Wirkverbindung stehenden Kühlelementen, wobei die Baugruppe endseitig geeignet ausgebildete Anschlusselemente aufweist, die eine definierte Kühlmittelzuführung beziehungsweise -abführung aus der Kühleinheit gewährleisten und gleichzeitig der Baugruppe eine hinreichende Stabilität zur mechanischen Verspannung verleihen sollen. Gemäß der Erfindung sind die Anschlusselemente an ihrer Außenseite jeweils eine bauteilversteifende Berippung und an ihrer Innenseite jeweils eine ebene Kontaktfläche aufweisen.

Vorzugsweise sind die Kühlelemente miteinander kältemitteldicht verbunden mittels Herstellung einer Wirkverbindung zwischen jeweils einer Eintrittsöffnung eines ersten Kühlelements und einer Austrittsöffnung eines gegenüberliegenden, zweiten Kühlelements. Jeweils zwei gegenüberliegende Kühlelemente sind somit mittels zwei Anschlussöffnungen kältemitteldicht miteinander wirkverbunden. Dabei können die Anschlussöffnungen unter Zwischenschaltung von separaten Anschlusselementen oder vorzugsweise mittels Verbindung geeignet ausgebildeter Vorsprünge der entsprechenden Kühlelemente miteinander in Verbindung stehen.

Vorzugsweise stehen jeweils koaxial zueinander angeordnete Ein- und Austrittsöffnungen eines Kühlelements direkt miteinander in Verbindung unter Ausbildung einer axialen Durchgangsverbindung durch das Kühlelement, mit welcher der zugehörige und im Wesentlichen senkrecht zur selbigen sich erstreckende Kühlmittelkanal verbunden ist. In dieser Weise kann das ein Kühlelement durchsetzende Kühlmittel durch eine jeweilige Eintrittsöffnung in den Kühlmittelkanal strömen und/oder direkt die in Bezug auf die Eintrittsöffnung koaxial liegende Austrittsöffnung desselben Kühlelements erreichen. Es kann somit gegebenenfalls ein Teil des Kühlmittelstroms von einem ersten Kühlelement koaxial durch die Ein- und Austrittsöffnungen desselben in ein zweites, gegenüberliegendes Kühlelement strömen, ohne notwendigerweise den Kühlmittelkanal durchsetzen zu müssen. Hierdurch wird eine schnelle und betriebsgünstige Durchsetzung aller hintereinander angeordneter Kühlelemente auch mit noch nicht erwärmtem beziehungsweise lediglich geringfügig mit Übertragungswärme beaufschlagtem Kühlmittel ermöglicht. Dabei ergeben sich vorteilhafterweise verhältnismäßig niedrige Betriebsdruckverluste aufgrund der strömungsgünstigeren Teildurchsetzung der Kühlelemente durch eine Direktverbindung (Bypassverbindung in Bezug auf den Kühlmittelkanal) durch koaxial angeordnete und miteinander in Direktverbindung stehende Ein- und Austrittsöffnungen eines Kühlelements.

Mit Vorteil sind die miteinander wirkverbundenen Kühlelemente und die endseitig angeordneten Anschlusselemente als stabile Baugruppe vorgefertigt beziehungsweise vormontiert zur Herstellung einer Wirkverbindung mit insbesondere einer Mehrzahl von zu kühlenden Fahrzeugelementen unter Ausbildung einer Sandwichstruktur. Eine derartige, vorgefertigte beziehungsweise vormontierte und insbesondere formstabile Baugruppe lässt sich in besonders handhabungsfreundlicher Weise mit einer zu kühlenden Fahrzeugeinrichtung, beispielsweise in Form einer Batterie oder einer Brennstoffzelle, wirkverbinden, da lediglich ein Anlagekontakt zwischen den entsprechenden Kontaktflächen der Kühlelemente und der Fahrzeugelemente hergestellt werden muss und anschließend gegebenenfalls eine zusätzliche mechanische Verspannung aller miteinander in Wirkverbindung stehenden Elemente erfolgen kann.

Entsprechend einer bevorzugten Ausführungsform sind die Anschlusselemente jeweils mit zueinander parallel geschalteten Elementhälften von Kühlelementen kühlmitteldicht wirkverbunden. Aufgrund der Modulbauweise lassen sich unterschiedliche Reihen- und/oder Parallelanordnungen von Kühlelementen unter Ausbildung einer formstabilen Baugruppe in verhältnismäßig einfacher Weise realisieren. Auch kann mittels geeigneter Ausbildung der Anschlusselemente eine definierte Kühlmittelzuführung beziehungsweise -abführung durch entsprechende Kühlmittelöffnungen in den Anschlusselementen geschaffen werden. Vorteilhafterweise ist es auch möglich, die Ausgestaltung der Baugruppe an die jeweiligen Fahrzeugeinrichtungsausführungen beziehungsweise Betriebsverhältnisse relativ einfach anzupassen.

Vorzugsweise sind die Anschlusselemente gleichartig ausgebildet. Es werden somit gleichartige Anschlusselemente sowohl für eine Kühlmittelzuführung in die Baugruppe als auch für eine Kühlmittelabführung aus der Baugruppe eingesetzt. Dies wirkt sich insbesondere kostenreduzierend und montagevereinfachend auf die Vorrichtung aus.

Die Elementhälften der Kühlelemente und die Anschlusselemente können als Tiefziehteil und/oder als Gussteil ausgebildet sein. Die Einzelelemente einer Baugruppe sind somit fertigungstechnisch in verhältnismäßig einfacher Weise herstellbar.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert. Es zeigen:
- Figuren 1 bis 3: schematische Seitenansichten einer erfindungsgemäßen Kühlelement-Baugruppe mit zwischenangeordneten Fahrzeugelementen;
- Figur 4: eine schematische Seitenansicht eines Anschlusselements der Kühlelement-Baugruppe der Figuren 1 bis 3 in vergrößertem Maßstab;
- Figur 5: eine schematische Draufsicht des Anschlusselements der Figur 4;
- Figur 6: eine schematische Unteransicht des Anschlusselements der Figur 4;
- Figur 7: eine schematische Perspektivdarstellung eines erfindungsgemäßen Kühlelements der Kühlelement-Baugruppen der Figuren 1 bis 3 in vergrößertem Maßstab;
- Figur 8: eine schematische Schnittdarstellung eines Details des Kühlelements der Figur 7;
- Figur 9: eine schematische Perspektivdarstellung zweier getrennter Elementhälften des Kühlelements der Figur 7;
- Figur 10: eine schematische Unteransicht auf ein mit drei parallel angeordneten Kühlelementen in Anlagekontakt stehendes Anschlusselement;
- Figur 11: eine schematische Seitenansicht des Anschlusselements mit Kühlelementen der Figur 10 und
- Figur 12: eine schematische Schnittdarstellung des Anschlusselements mit Kühlelementen der Figur 10 gemäß der Schnittlinie XII-XII.

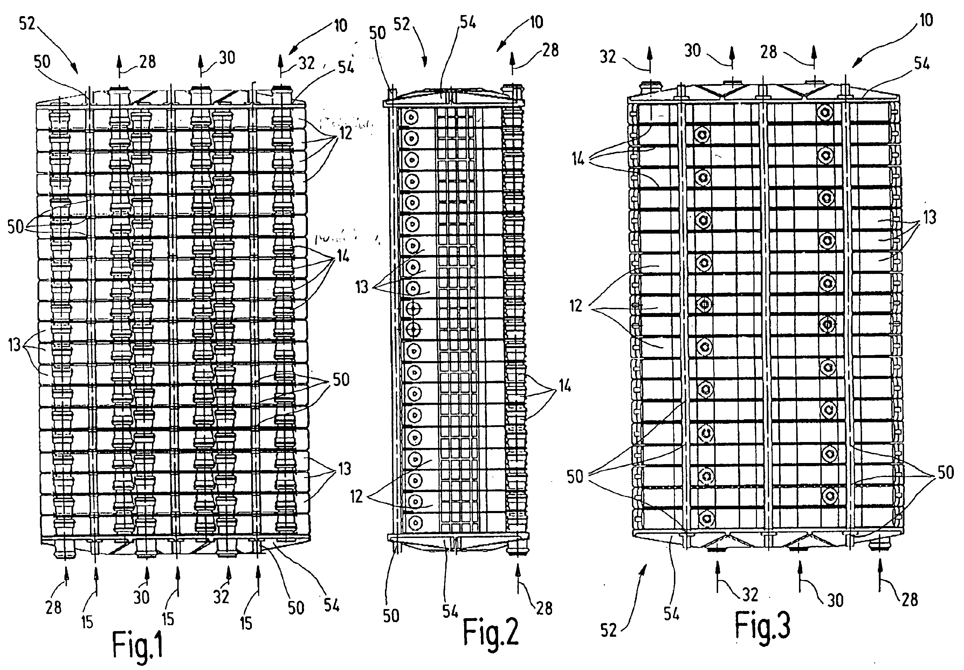

Die Figuren 1 bis 3 zeigen eine allgemein mit 10 bezeichnete Vorrichtung zum Kühlen einer Fahrzeugeinrichtung 12, wobei die Fahrzeugeinrichtung 12 beispielsweise eine Batterie oder eine Brennstoffzelle sein kann. Die Fahrzeugeinrichtung 12 enthält eine Mehrzahl an Fahrzeugelementen 13, beispielsweise in Form von Zellen, welche jeweils mittels einer Mehrzahl an Kühlelementen 14 zu kühlen sind. Die Kühlelemente 14 und die Fahrzeugelemente 13 sind in drei zueinander parallel angeordneten Kühlelementreihen 15 derart miteinander wirkverbunden, dass eine Sandwichstruktur aus miteinander abwechselnd in Anlagekontakt stehenden Kühlelementen 14 und Fahrzeugelementen 13 gebildet wird. Die Sandwichstruktur wird endseitig begrenzt mittels eines jeweiligen Anschlusselements 54. Die Anschlusselemente 54 weisen jeweils drei Kühlmittel-Öffnungen auf, wobei die Kühlmittel-Öffnungen derart angeordnet sind, dass pro Kühlelementreihe 15 eine Kühlmitteldurchsetzung der Vorrichtung 10 gemäß den Pfeilen 28, 30, 32 möglich ist. Die Vorrichtung 10 weist ferner eine Mehrzahl an Durchgangsöffnungen 50 auf zur Herstellung einer mechanischen Verspannung des Gesamtsystems mittels geeigneter Spannelemente (beispielsweise Zuganker, nicht dargestellt). Eine derart ausgebildete Vorrichtung 10 bildet somit eine kompakte und formstabile Kühleinheit 52.

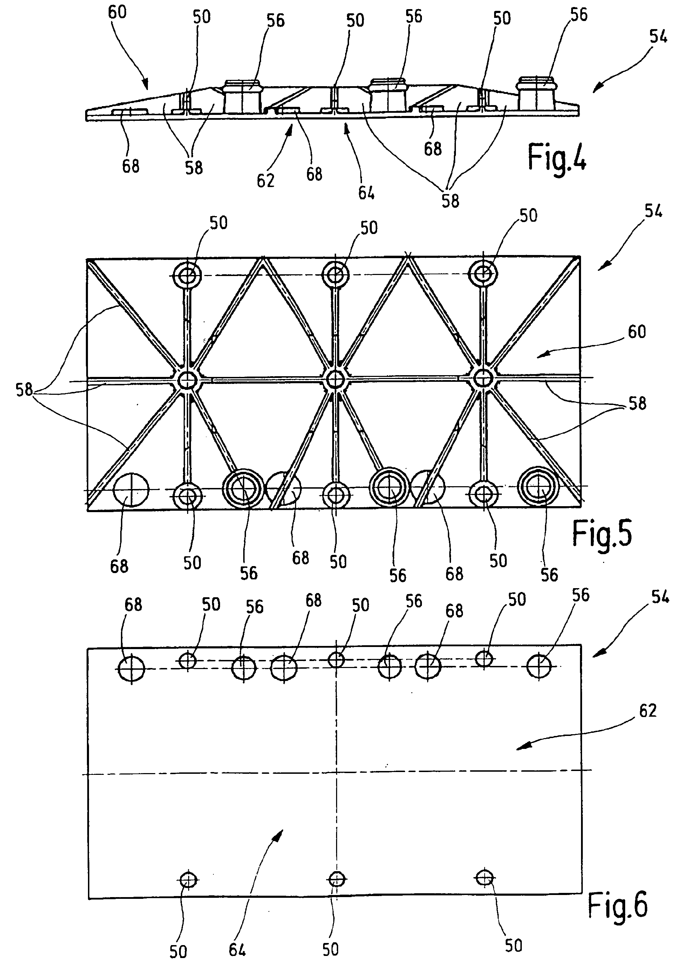

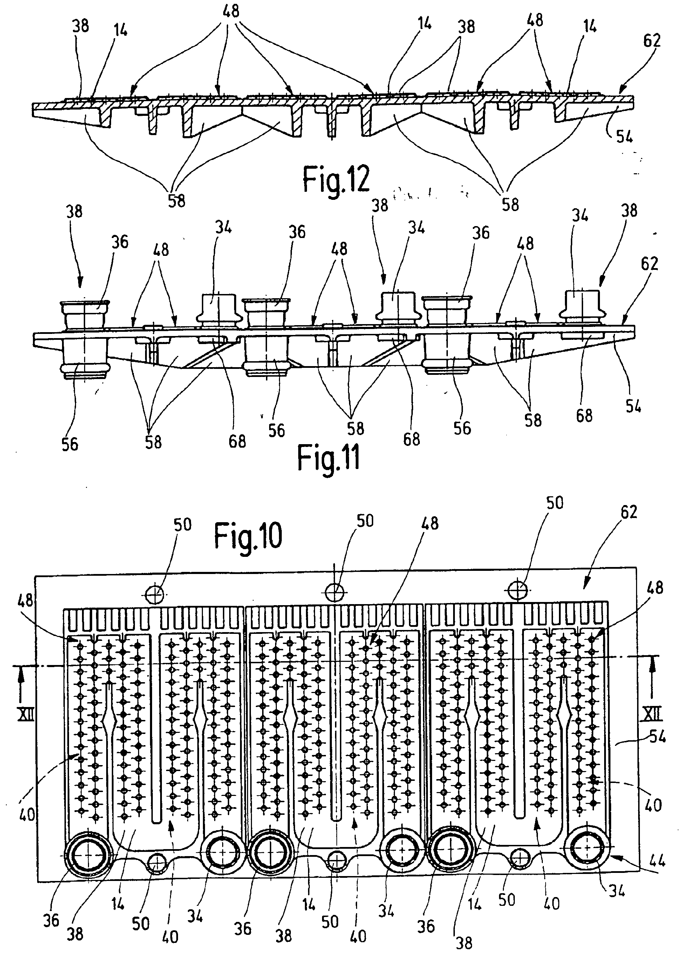

Die Figuren 4 bis 6 zeigen schematische Ansichten des Anschlusselements 54 der Figuren 1 bis 3 in vergrößertem Maßstab. Das Anschlusselement 54 enthält eine Mehrzahl, im vorliegenden Ausführungsbeispiel entsprechend der Anzahl der Kühlelementreihen 15 drei Durchgangsöffnungen 56. Die Durchgangsöffnungen 56 können als Kühlmittel-Eintrittsöffnungen beziehungsweise als Kühlmittel-Austrittsöffnungen dienen. Sie sind vorzugsweise als Buchse ausgebildet und zur Herstellung einer Wirkverbindung mit nicht dargestellten Kühlmittel-Fördermitteln geeignet. Das Anschlusselement 54 ist an seiner Außenseite 60 mit einer bauteilversteifenden Berippung 58 versehen. An seiner Innenseite 62 weist das Anschlusselement 54 eine ebene Kontaktfläche 64 auf. Ferner sind in den Figuren 4 bis 6 die Durchgangsöffnungen 50 des Anschlusselements 54 zur Herstellung einer mechanischen Verspannung einer Sandwichstruktur gemäß den Figuren 1 bis 3 mit geeigneten Verspannungsmitteln dargestellt. Die zur insbesondere symmetrischen Verspannung vorgesehenen Durchgangsöffnungen 50 sind in zwei gegenüberliegenden Randbereichen des Anschlusselements 54 angeordnet, während die zur Kühlmittelförderung vorgesehenen Durchgangsöffnungen 56 in einem einzigen Randbereich des Anschlusselements 54 liegen. Das Anschlusselement 54 enthält ferner drei Abdeckbereiche 68. Es sind drei Kühlelementhälften 38 mit der ebenen Kontaktfläche 64 des Anschlusselements 54 kühlmitteldicht, beispielsweise mittels Löten, Kleben etc., verbunden unter jeweiliger Ausbildung eines Kühlmittelkanals 40 (siehe auch Figuren 10 bis 12).

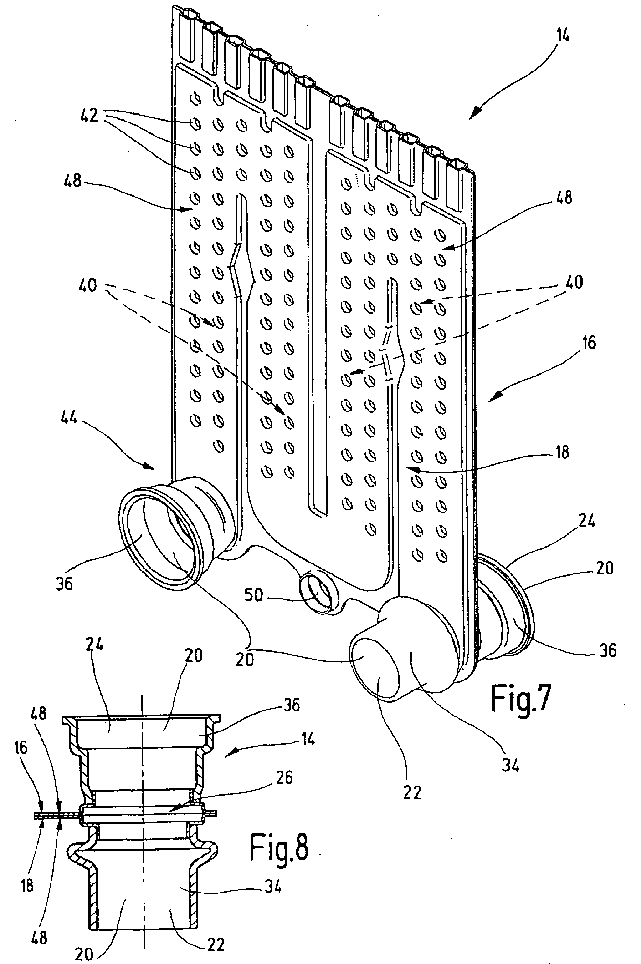

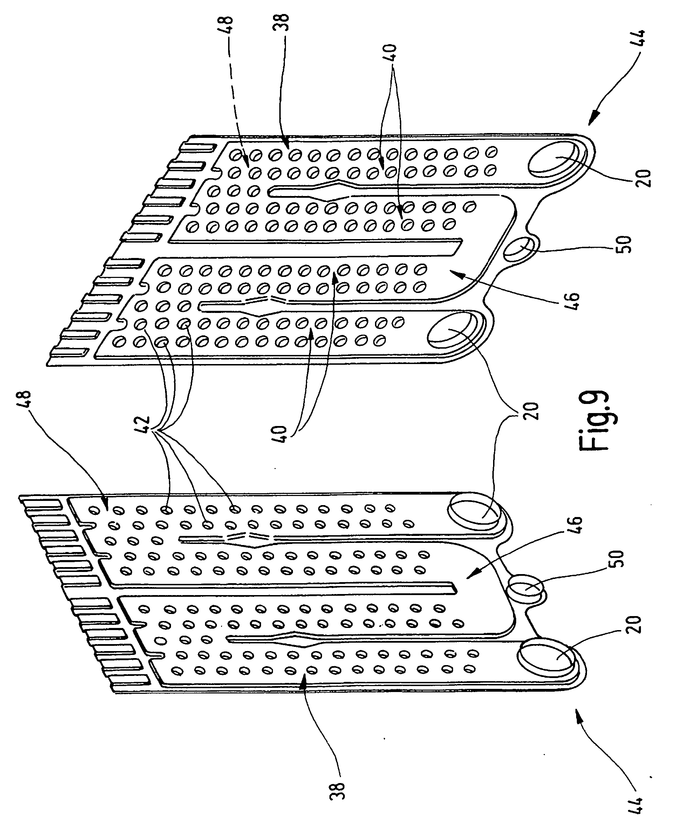

Die Figuren 7 bis 9 zeigen schematische Darstellungen eines Kühlelements 14. Das Kühlelement 14 ist mit einem Kühlmittel durchströmbar und gemäß den Figuren 1 bis 3 mit mindestens einem zu kühlenden Fahrzeugelement 13 in Anlagekontakt bringbar. Eine erste Kühlelementseite 16 und eine dieser gegenüberliegende zweite Kühlelementseite 18 besitzt jeweils zwei Anschlussöffnungen 20, wobei an jeder Kühlelementseite 16, 18 eine Eintrittsöffnung 22 und eine Austrittsöffnung 24 für das Kühlmittel vorgesehen ist. Die Anschlussöffnungen 20 des Kühlelements 14 stehen mit einem Innenraum 26 desselben kommunizierend in Verbindung. Dabei ist eine Eintrittsöffnung 22 des Kühlelements 14 an einer Kühlelementseite (16 oder 18) koaxial zu einer Austrittsöffnung 24 an der anderen Kühlelementseite (18 oder 16) desselben Kühlelements 14 angeordnet. Die Anschlussöffnungen 20 sind als Vorsprünge und insbesondere derart zueinander komplementär als Stutzen 34 beziehungsweise als Buchsen 36 ausgebildet, dass die Eintrittsöffnungen 22 passgenau mit den Austrittsöffnungen 24 zweier gegenüber angeordneter Kühlelemente 14 (siehe auch Figuren 1 bis 3) wirkverbindbar sind. Die jeweils koaxial zueinander angeordneten Ein- und Austrittsöffnungen 22, 24 des Kühlelements 14 stehen direkt miteinander in Verbindung unter Ausbildung einer axialen Durchgangsverbindung durch das Kühlelement 14 (siehe insbesondere Figur 8). Dabei weist das Kühlelement 14 einen sich von einer Eintrittsöffnung 22 an einer Kühlelementseite (16 oder 18) zu einer zur selbigen nicht koaxial liegenden Austrittsöffnung 24 an der anderen Kühlelementseite (18 oder 16) windenden Kühlmittelkanal 40 auf. Das Kühlelement 14 kann somit derart mit Kühlmittel durchsetzt werden, dass ein Kühlmittelteilstrom durch den Kühlmittelkanal 40 strömt, während ein Kühlmittelreststrom durch zwei zueinander koaxial angeordnete Anschlussöffnungen 20 (Eintrittsöffnung 22 und Austrittsöffnung 24) geleitet wird. Das Kühlelement 14 besteht aus zwei geometrisch gleichartig ausgebildeten Elementhälften 38 (siehe insbesondere Figur 9), die miteinander kühlmitteldicht verbunden sind. Jede Elementhälfte 38 weist eine Mehrzahl an voneinander beabstandeten Stabilisierungsnoppen 42 auf, wobei jeweils zwei gegenüberliegende Stabilisierungsnoppen 42 stirnseitig zueinander in Anlagekontakt stehen (siehe Figur 7). Die Elementhälften 38 sind somit als oberflächenstrukturierte Halbschalen 46 ausgebildet, wobei sie eine jeweilige, im Wesentlichen ebene Kontaktfläche 48 aufweisen. Das Kühlelement 14 enthält eine Durchgangsöffnung 50 zur Herstellung einer mechanischen Verspannung zwischen einer Mehrzahl an Kühlelementen 14 und zwischenangeordneten Fahrzeugelementen 13 sowie endseitig angeordneten Anschlusselementen 54 unter Ausbildung einer formstabilen Sandwichstruktur gemäß den Figuren 1 bis 3. Die Anschlussöffnungen 20 und die Durchgangsöffnung 50 des Kühlelements 14 sind in einem Randbereich 44 an der entsprechenden Kühlelementseite 16, 18 angeordnet.

Die Figuren 10 bis 12 zeigen schematische Darstellungen des Anschlusselements 54 gemäß den Figuren 1 bis 3 mit drei parallel angeordneten und mit dem Anschlusselement 54 verbundenen Elementhälften 38 der Kühlelemente 14. Gemäß Figur 11 kann beispielsweise eine Zuführung von Kühlmittel durch die Durchgangsöffnung 56 des Anschlusselements 54 in das Kühlelement 14 (beziehungsweise Elementhälfte 38) erfolgen, wobei ein Kühlmittelteilstrom durch den Kühlmittelkanal 40 (siehe auch Figur 10) zum Stutzen 34 strömt und ein Kühlmittelreststrom direkt, das heißt ohne durch den Kühlmittelkanal 40 zu strömen, zur koaxial angeordneten Buchse 36 geführt wird. Mit dem Stutzen 34 und der Buchse 36 des jeweiligen Kühlelements 14 gemäß Figur 11 können weitere Kühlelemente 14 komplementär unter Ausbildung einer jeweiligen Stutzen-Buchsen-Wirkverbindung kühlmitteldicht angeschlossen werden unter Ausbildung eines Zwischenraums, der durch im Wesentlichen ebene und zur Wärmeübertragung dienende Kontaktflächen 48 begrenzt ist. Dabei erfolgt die erwünschte Wärmeübertragung von einem im Zwischenraum angeordneten und zu kühlenden Fahrzeugelement 13 mittels der Kontaktfläche 48 auf das die Kühlelemente 14 durch den Kühlmittelkanal 40 durchsetzende Kühlmittel (siehe auch Figuren 1 bis 3).

Wie in Figur 10 dargestellt, sind die Anschlussöffnungen 20 (Stutzen 34 und Buchsen 36) einer jeweiligen Elementhälfte 38 eines Kühlelements 14 (und somit auch weiterer, mit der Elementhälfte 38 verbundener Kühlelemente 14) in einem Randbereich 44 angeordnet. Hierdurch ist es möglich, bei einer vorgefertigten beziehungsweise vormontierten Vorrichtung 10 gemäß den Figuren 1 bis 3, bestehend aus zwei Anschlusselementen 54 und einer Mehrzahl an miteinander kühlmitteldicht wirkverbundenen Kühlelementen 14 unter Ausbildung von zur Aufnahme der Fahrzeugelemente 13 vorgesehenen Zwischenräumen, in montagefreundlicher Weise eine Sandwichstruktur mit einer entsprechenden Anzahl an Fahrzeugelementen 13 zu schaffen. Dadurch, dass der Zugang zu den jeweiligen Zwischenräumen zwischen zwei gegenüberangeordneten Kühlelementen 14 lediglich im Randbereich 44 durch die Stutzen 34 beziehungsweise Buchsen 36 beschränkt ist, können die Fahrzeugelemente 13 (beispielsweise Zellen) problemlos von der in Bezug auf den Randbereich 44 gegenüberliegenden Seite in den Zwischenraum eingeschoben werden zur Herstellung der erwünschten Sandwichstruktur. Anschließend kann die gesamte Kühleinheit 52 mit zwischenangeordneten Fahrzeugelementen 13 mittels geeigneter Verspannungselemente (nicht dargestellt) formstabil verspannt werden. Dabei gewährleisten die Stabilisierungsnoppen 42 eines jeweiligen Kühlelements 14, dass die Kontaktflächen 48 auch nach der Verspannung der Vorrichtung 10 im Wesentlichen eben bleiben, so dass ein wärmeübertragungsgünstiger Anlagekontakt zwischen einem jeweiligen Kühlelement 14 und einem an selbigem anliegenden Fahrzeugelement 13 gewährleistet ist.

Die kühlmitteldicht zu verbindenden Stoßflächen der Kühlelemente 14 einer jeweiligen Kühlelementreihe 15 können beispielsweise in einem speziell hierzu vorgesehenen Lötofen automatisiert zusammengelötet werden. Alternativ ist auch eine Verbindung mittels Kleben oder Bördeln denkbar. Ferner sind die Elementhälften 38 der Kühlelemente 14 und die Anschlusselemente 54 vorzugsweise aus Metall und als Tiefziehteil und/oder als Gussteil ausgebildet.

Vorteilhafterweise kann mittels der modularen Bauweise der Vorrichtung 10 in verhältnismäßig einfacher Weise eine Anpassung an die jeweils vorliegenden konstruktiven Gegebenheiten eines Fahrzeugs vorgenommen werden.

## Patentansprüche

1. Vorrichtung (10) zum Kühlen einer Fahrzeugeinrichtung (12), insbesondere Batterie oder Brennstoffzelle, mittels eines Kühlmittels, mit einer Kühleinheit (52), aufweisend eine Mehrzahl an gleichartig ausgebildeten, mit Kühlmittel durchströmbaren und mit mindestens einem zu kühlenden Element (13) der Fahrzeugeinrichtung (12) in Anlagekontakt bringbaren Kühlelementen (14), die jeweils eine erste Kühlelementseite (16) und eine dieser gegenüberliegende zweite Kühlelementseite (18) aufweisen, wobei die Kühlelementseiten Anschlussöffnungen (20) besitzen, die Eintritts- beziehungsweise Austrittsöffnungen (22, 24) für das Kühlmittel bilden und mit einem einen Kühlmittelkanal (40) bildenden Innenraum (26) des jeweiligen Kühlelements (14) kommunizierend in Verbindung stehen, wobei die erste und zweite Kühlelementseite (16, 18) jeweils mindestens zwei Anschlussöffnungen (20) aufweisen, wobei die Kühlelemente (14) jeweils eine nicht mit dem Kühlmittelkanal (40) in Wirkverbindung stehende Durchgangsöffnung (50) zur mechanischen Verspannung der Kühlelemente (14) mit dem zwischenangeordneten Element (13) der Fahrzeugeinrichtung aufweisen, **dadurch gekennzeichnet, dass** die Kühlelemente (14) jeweils aus zwei Elementhälften (38) bestehen, die miteinander kühlmitteldicht verbunden sind, und dass die Kühleinheit (52) endseitig jeweils ein mindestens eine Durchgangsöffnung (56) enthaltenes Anschlusselement (54) aufweist, welches jeweils mit einer zugehörigen und zwischenangeordneten Elementhälfte (38) eines Kühlelements (14) kühlmitteldicht wirkverbunden ist und dass die Anschlusselemente (54) an ihrer Außenseite (60) jeweils eine bauteilversteifende Berippung (58) und an ihrer Innenseite (62) jeweils eine ebene Kontaktfläche (64) aufweisen.

2. Vorrichtung nach Anspruch 1, **dadurch gekennzeichnet, dass** eine Austrittsöffnung (24) eines Kühlelements (14) mit einer Eintrittsöffnung (22) eines weiteren Kühlelements (14) in Wirkverbindung steht.

3. Vorrichtung nach einem der vorhergehenden Ansprüche, **dadurch gekennzeichnet, dass** die Anschlussöffnungen (20) als Vorsprünge ausgebildet sind.

4. Vorrichtung nach einem der vorhergehenden Ansprüche, **dadurch gekennzeichnet, dass** eine Eintrittsöffnung (22) eines jeweiligen Kühlelements (14) an einer ersten Kühlelementseite (16) koaxial zu einer Austrittsöffnung (24) an einer zweiten Kühlelementseite (18) desselben Kühlelements (14) angeordnet ist.

5. Vorrichtung nach einem der vorhergehenden Ansprüche, **dadurch gekennzeichnet, dass** die Eintrittsöffnungen (22) und die Austrittsöffnungen (24) eines jeweiligen Kühlelements (14) zueinander komplementär als Stutzen (34) oder Buchsen (36) ausgebildet sind.

6. Vorrichtung nach einem der vorhergehenden Ansprüche, **dadurch gekennzeichnet, dass** die Kühlelemente (14) jeweils aus zwei geometrisch gleichartig ausgebildeten Elementhälften (38) bestehen, die miteinander kühlmitteldicht verbunden sind.

7. Vorrichtung nach einem der vorhergehenden Ansprüche, **dadurch gekennzeichnet, dass** die Kühlelemente (14) jeweils einen sich von einer Eintrittsöffnung (22) an einer ersten Kühlelementseite (16) zu einer Austrittsöffnung (24) an einer zweiten Kühlelementseite (18) windenden Kühlmittelkanal (40) aufweisen.

8. Vorrichtung nach einem der vorhergehenden Ansprüche, **dadurch gekennzeichnet, dass** die Elementhälften (38) eine Mehrzahl an voneinander beabstandeten Stabilisierungsnoppen (42) aufweisen, wobei jeweils zwei gegenüberliegende Stabilisierungsnoppen (42) stirnseitig zueinander in Anlagekontakt stehen.

9. Vorrichtung nach einem der vorhergehenden Ansprüche, **dadurch gekennzeichnet, dass** die Anschlussöffnungen (20) eines jeweiligen Kühlelements (14) in einem Randbereich (44) an der entsprechenden Kühlelementseite (16,18) angeordnet sind.

10. Vorrichtung nach einem der vorhergehenden Ansprüche, **dadurch gekennzeichnet, dass** die Elementhälften (38) als oberflächenstrukturierte Halbschalen (46) ausgebildet sind unter Ausbildung einer jeweiligen, im Wesentlichen ebenen Kontaktfläche (48).

11. Vorrichtung nach einem der vorhergehenden Ansprüche, **dadurch gekennzeichnet, dass** die Kühlelemente (14) miteinander kältemitteldicht verbunden sind mittels Herstellung einer Wirkverbindung zwischen jeweils einer Eintrittsöffnung (22) eines ersten Kühlelements (14) und einer Austrittsöffnung (24) eines gegenüberliegenden, zweiten Kühlelements (14).

12. Vorrichtung nach einem der vorhergehenden Ansprüche, **dadurch gekennzeichnet, dass** jeweils koaxial zueinander angeordnete Ein- und Austrittsöffnungen (22,24) eines Kühlelements (14) direkt miteinander in Verbindung stehen unter Ausbildung einer axialen Durchgangsverbindung durch das Kühlelement (14), mit welcher der zugehörige und im Wesentlichen senkrecht zur selbigen sich erstreckende Kühlmittelkanal (40) verbunden ist.

13. Vorrichtung nach einem der vorhergehenden Ansprüche, **dadurch gekennzeichnet, dass** die miteinander wirkverbundenen Kühlelemente (14) und die endseitig angeordneten Anschlusselemente (54) als stabile Baugruppe vorgefertigt beziehungsweise vormontiert sind zur Herstellung einer Wirkverbindung mit insbesondere einer Mehrzahl von zu kühlenden Fahrzeugelementen (23) unter Ausbildung einer Sandwichstruktur.

14. Vorrichtung nach einem der vorhergehenden Ansprüche, **dadurch gekennzeichnet, dass** die Anschlusselemente (54) jeweils mit zueinander parallel geschalteten Elementhälften (38) von Kühlelementen (14) kühlmitteldicht wirkverbunden sind.

15. Vorrichtung nach einem der vorhergehenden Ansprüche, **dadurch gekennzeichnet, dass** die Anschlusselemente (54) gleichartig ausgebildet sind.

16. Vorrichtung nach einem der vorhergehenden Ansprüche, **dadurch gekennzeichnet, dass** die Elementhälften (38) der Kühlelemente (14) und die Anschlusselemente (54) als Tiefziehteil und/oder als Gussteil ausgebildet sind.

## Claims

1. A device (10) for cooling a vehicle appliance (12), in particular a battery or a fuel cell, by means of a coolant, with a cooling unit (52), having a plurality of identically designed cooling elements (14) through which coolant can be flowed and which can be brought into bearing contact with at least one element (13) of the vehicle appliance (12) to be cooled, each having a first cooling element side (16) and an opposite second cooling element side (18), the cooling element sides having connection openings (20) which respectively form inlet and outlet connection openings (22, 24) for the coolant and are in communicative connection with an interior (26) of the respective cooling element (14) forming a coolant passage (40), wherein the first and second cooling element sides (16, 18) have at least two connection openings (20) each, wherein the cooling elements (14) each have a through opening (50) which is not operatively connected to the coolant passage (40) for mechanical coupling of the cooling elements (14) to the intermediately arranged element (13) of the vehicle appliance, **characterised in that** the cooling elements (14) are each comprised of two element halves (38) which are connected to one another in a manner to prevent leak of coolant, and that the cooling unit (52) has a respective connecting element (54) in an end side, including at least one through opening (56) and being operatively connected to a respective and intermediately arranged element half (38) of a cooling element (14) in a manner to prevent leak of coolant, and that the connecting elements (54) have a component reinforcing fin (58) each on the outer side (60) thereof and a planar contact surface (64) each on the inner side (62) thereof.

2. The device according to claim 1, **characterised in that** an outlet opening (24) of a cooling element (14) is operatively connected to an inlet opening (22) of another cooling element (14).

3. The device according to any of the preceding claims, **characterised in that** the connection openings (20) have the form of a projection.

4. The device according to any of the preceding claims, **characterised in that** an inlet opening (22) of a first cooling element side (16) of a respective cooling element (14) is arranged coaxially with respect to an outlet opening (24) on a second cooling element side (18) of the same cooling element (14).

5. The device according to any of the preceding claims, **characterised in that** the inlet openings (22) and the outlet openings (24) of a respective cooling element (14) are complementarily shaped as stubs (34) or sockets (36) with respect to one another.

6. The device according to any of the preceding claims, **characterised in that** each of the cooling elements (14) is comprised of two geometrically identical element halves (38) which are connected to one another in a manner as to prevent leak of coolant.

7. The device according to any of the preceding claims, **characterised in that** each of the cooling elements (14) includes a coolant passage (40) winding from an inlet opening (22) on a first cooling element side (16) to an outlet opening (24) on a second cooling element side (18).

8. The device according to any of the preceding claims, **characterised in that** the element halves (38) have a plurality of spaced stabilising studs (42), wherein the front sides of two respective stabilising studs (42) lie opposite and in bearing contact with one another.

9. The device according to any of the preceding claims, **characterised in that** the connection openings (20) of a respective cooling element (14) are arranged in an edge region (44) on the respective cooling element side (16, 18).

10. The device according to any of the preceding claims, **characterised in that** the element halves (38) are shaped as surface structured half shells (46) so as to form a respective substantially planar contact surface (48).

11. The device according to any of the preceding claims, **characterised in that** the cooling elements (14) are connected to one another in a manner to prevent leak of coolant by creating a respective operative connection between an inlet opening (22) of a first cooling element (14) and an outlet opening (24) of an opposite second cooling element (14).

12. The device according to any of the preceding claims, **characterised in that** respective inlet and outlet openings (22, 24) of a cooling element (14) which are coaxially arranged to one another are in direct connection to one another so as to form an axial through connection through the cooling element (14) to which the respective coolant passage (40), extending substantially perpendicular thereto, is connected.

13. The device according to any of the preceding claims, **characterised in that** the cooling elements (14) which are operatively connected to one another and the connecting elements (54) which are arranged on the end sides are prefabricated or preassembled in a stable assembly to create an operative connection, in particular to a plurality of vehicle elements (23) to be cooled, to form a sandwich structure.

14. The device according to any of the preceding claims, **characterised in that** the connecting elements (54) are each operatively connected to parallelly connected element halves (38) of cooling elements (14) in a manner to prevent leak of coolant.

15. The device according to any of the preceding claims, **characterised in that** the connecting elements (54) are identically designed.

16. The device according to any of the preceding claims, **characterised in that** the element halves (38) of the cooling elements (14) and the connecting elements (54) are formed as a deep drawing part and/or cast part.

## Revendications

1. Dispositif (10) servant au refroidissement d'un équipement de véhicule (12), en particulier d'une batterie ou d'une pile à combustible, au moyen d'un liquide de refroidissement, ledit dispositif comprenant une unité de refroidissement (52) présentant une pluralité d'éléments de refroidissement (14) configurés de façon similaire, pouvant être traversés par le liquide de refroidissement et pouvant être placés en contact d'appui avec au moins un élément (13) - à refroidir - de l'équipement (12) du véhicule, lesquels éléments de refroidissement présentent à chaque fois un premier côté d'élément de refroidissement (16) et un second côté d'élément de refroidissement (18) faisant face à ce premier côté, où les côtés des éléments de refroidissement comportent des ouvertures de raccordement (20) qui forment des ouvertures d'entrée ou de sortie (22, 24) pour le liquide de refroidissement et avec lesquelles sont en communication lesdites ouvertures de raccordement, en communiquant avec un espace intérieur (26) de l'élément de refroidissement respectif (14), ledit espace intérieur formant un conduit de liquide de refroidissement (40), où le premier et le second côté (16, 18) de l'élément de refroidissement présentent respectivement au moins deux ouvertures de raccordement (20), où les éléments de refroidissement (14) présentent à chaque fois une ouverture de passage (50) ne se trouvant pas en communication active avec le conduit de liquide de refroidissement (40), ladite ouverture de passage servant à la contrainte mécanique des éléments de refroidissement (14) avec l'élément (13) de l'équipement du véhicule, ledit élément étant disposé de manière intercalée, **caractérisé en ce que** les éléments de refroidissement (14) se composent à chaque fois de deux moitiés d'éléments (38) qui sont assemblées l'une à l'autre de manière étanche au liquide de refroidissement, et **en ce que** l'unité de refroidissement (52) présente à chaque fois, côté extrémité, un élément de raccordement (54) comprenant au moins une ouverture de passage (56), lequel élément de raccordement est à chaque fois en communication active, de manière étanche au liquide de refroidissement, avec une moitié d'élément correspondante (38) d'un élément de refroidissement (14), ladite moitié d'élément étant disposée de manière intercalée, et **en ce que** les éléments de raccordement (54) présentent à chaque fois, sur leur côté extérieur (60), un ensemble de nervures (58) renforçant le composant, et présentent à chaque fois, sur leur côté intérieur (62), une surface de contact plane (64).

2. Dispositif selon la revendication 1, **caractérisé en ce qu'**une ouverture de sortie (24) d'un élément de refroidissement (14) est en communication active avec une ouverture d'entrée (22) d'un autre élément de refroidissement (14).

3. Dispositif selon l'une ou l'autre des revendications précédentes, **caractérisé en ce que** les ouvertures de raccordement (20) sont configurées comme des parties saillantes.

4. Dispositif selon l'une quelconque des revendications précédentes, **caractérisé en ce qu'**une ouverture d'entrée (22) d'un élément de refroidissement respectif (14) est disposée sur un premier côté d'élément de refroidissement (16), de manière coaxiale par rapport à une ouverture de sortie (24) placée sur un second côté d'élément de refroidissement (18) de ce même élément de refroidissement (14).

5. Dispositif selon l'une quelconque des revendications précédentes, **caractérisé en ce que** les ouvertures d'entrée (22) et les ouvertures de sortie (24) d'un élément de refroidissement respectif (14) sont configurées comme des tubulures (34) ou des douilles (36) complémentaires les unes des autres.

6. Dispositif selon l'une quelconque des revendications précédentes, **caractérisé en ce que** les éléments de refroidissement (14) se composent à chaque fois de deux moitiés d'éléments (38) configurées de façon géométriquement similaire, lesquelles moitiés d'éléments sont assemblées l'une à l'autre de manière étanche au liquide de refroidissement.

7. Dispositif selon l'une quelconque des revendications précédentes, **caractérisé en ce que** les éléments de refroidissement (14) présentent à chaque fois un conduit de liquide de refroidissement (40) serpentant depuis une ouverture d'entrée (22) placée sur un premier côté d'élément de refroidissement (16), jusqu'à une ouverture de sortie (24) placée sur un second côté d'élément de refroidissement (18).

8. Dispositif selon l'une quelconque des revendications précédentes, **caractérisé en ce que** les moitiés d'éléments (38) présentent une pluralité de tétons de stabilisation (42) espacés les uns des autres, où deux tétons de stabilisation (42) se faisant face sont à chaque fois en contact d'appui l'un par rapport à l'autre, côté frontal.

9. Dispositif selon l'une quelconque des revendications précédentes, **caractérisé en ce que** les ouvertures de raccordement (20) d'un élément de refroidissement respectif (14) sont disposées dans une zone de bordure (44) placée sur le côté d'élément de refroidissement correspondant (16, 18).

10. Dispositif selon l'une quelconque des revendications précédentes, **caractérisé en ce que** les moitiés d'éléments (38) sont configurées comme des demi-coques (46) à surface structurée, en formant une surface de contact respective (48) pratiquement plane.

11. Dispositif selon l'une quelconque des revendications précédentes, **caractérisé en ce que** les éléments de refroidissement (14) sont reliés entre eux de manière étanche au fluide frigorigène, grâce à l'établissement d'une communication active se produisant à chaque fois entre une ouverture d'entrée (22) d'un premier élément de refroidissement (14), et une ouverture de sortie (24) d'un second élément de refroidissement (14) faisant face à ce premier élément.

12. Dispositif selon l'une quelconque des revendications précédentes, **caractérisé en ce que** des ouvertures d'entrée et de sortie (22, 24) d'un élément de refroidissement (14), disposées à chaque fois de manière coaxiale l'une par rapport à l'autre, sont en communication directe l'une avec l'autre, en formant un passage axial de communication à travers l'élément de refroidissement (14), passage de communication auquel est relié le conduit de liquide de refroidissement correspondant (40) s'étendant pratiquement de façon perpendiculaire à ce même passage de communication.

13. Dispositif selon l'une quelconque des revendications précédentes, **caractérisé en ce que** les éléments de refroidissement (14) communiquant entre eux de manière active et les éléments de raccordement (54) disposés côté extrémité sont préfabriqués ou prémontés comme un ensemble fonctionnel stable, afin d'établir une communication active avec, en particulier, une pluralité d'éléments de véhicule (23) à refroidir, en formant une structure de type sandwich.

14. Dispositif selon l'une quelconque des revendications précédentes, **caractérisé en ce que** les éléments de raccordement (54) sont à chaque fois en communication active, de manière étanche au liquide de refroidissement, avec des moitiés d'éléments (38) concernant des éléments de refroidissement (14), lesdites moitiés d'éléments étant montées en parallèle les unes par rapport aux autres.

15. Dispositif selon l'une quelconque des revendications précédentes, **caractérisé en ce que** les éléments de raccordement (54) sont configurés de façon similaire.

16. Dispositif selon l'une quelconque des revendications précédentes, **caractérisé en ce que** les moitiés d'éléments (38) des éléments de refroidissement (14) et les éléments de raccordement (54) sont configurés comme une pièce obtenue par emboutissage profond et / ou comme une pièce moulée.
